# EUROPÄISCHE PATENTSCHRIFT

(11) **EP 0 743 732 B1**
(45) Veröffentlichungstag und Bekanntmachung des Hinweises auf die Patenterteilung: **08.04.1998**
(21) Anmeldenummer: 96107310.3
(22) Anmeldetag: 09.05.1996
(51) Int. Cl.: H02G 3/04

(54) **Einrichtung zum Potentialausgleich**
Device for equalising potential
Dispositif de mise au même potentiel

(30) Priorität: 19.05.1995 DE 29508312 U
(43) Veröffentlichungstag der Anmeldung: 20.11.1996
(73) Patentinhaber: REHAU AG + Co, 95111 Rehau (DE)
(72) Erfinder: Zielke, Peter, 95111 Rehau (DE); Metzger, Manfred, 95111 Rehau (DE); Winterling, Stefan, 95111 Rehau (DE)

(56) Entgegenhaltungen:
- EP-A- 0 469 457
- EP-A- 0 590 616
- DE-U- 9 205 245

## Beschreibung

Die Erfindung betrifft eine Einrichtung zum Potential ausgleich bei mehrteiligen, metallischen Hohlprofilen, vorzugsweise bei metallischen Installationskanälen, wobei zwischen dem Kanaldeckel und dem Kanalunterteil eine elektrisch leitende Verbindung geschaffen ist.

Aus der EP 0 590 616 A1 ist eine Einrichtung zum Potentialausgleich bekannt, bei der eine ausgestanzte Erdungsklemme am Deckelteil des Kabelkanals angeformt ist. Diese ausgestanzte Erdungsklemme besteht aus einer sogenannten Anschlußfahne, die durch Freischneiden und Biegen an einem der U-Schenkel des Deckelteils hergestellt wird. Auf solche Erdungsklemmen müssen für die elektrische Verbindung zum Erdpotential noch elektrische Leitungen z.B. aufgesteckt werden. Die Erdungsklemme oder Erdungsfahne wird in diesem Fall durch einen dreiseitigen Freischnitt in einem U-Schenkel des Kanaldeckels ausgeführt und die so gebildete Fahne wird so weit abgebogen, daß der Steckverbinder für die Erdungsleitung aufgeschoben werden kann.

Andere, bekannte Varianten zur Herstellung einer Erdungsverbindung weisen beispielsweise in den lichten Innenraum des Kabelkanals hineinragende, punktgeschweißte Halter auf, die mit den Erdungsleitungen durch Aufstecken, Auflöten und dergleichen Befestigungsarten verbunden sein können.

Alle diese Erdungsarten des bekannten Standes der Technik sind in erster Linie montageintensiv und daher mit entspechenden Kostennachteilen belastet. Darüberhinaus ragen diese Erdungseinrichtungen in den lichten Innenraum der Kabelkanäle hinein und stellen damit ein Verletzungspotential für dort eingezogene Kabel dar. Hier sind insbesondere die scharfen Stanzränder oder die sonstigen scharfen Kanten von Metallteilen als besonders nachteilig zu bezeichnen.

Hier setzt die Erfindung ein, die es sich zur Aufgabe gestellt hat, einen Erdungspotentialausgleich bei metallischen Hohlprofilen ohne Verwendung einer Erdungslitze durch Zwangserdung im Deckelbereich zu schaffen. Erfindungsgemäß wird dazu vorgeschlagen, daß der Potentialausgleich in die Kabelhalteklammer verlagert ist, deren freie Klammerenden mit scharfen Kontaktspitzen ausgestattet sind, welche bei der Verklammerung mit den freien, profilierten Enden der Seitenwände des Kanalunterteils zur Herstellung der elektrisch leitenden Verbindung deren Oberfläche gezielt beschädigen.

Der besondere Vorteil des erfindungsgemäßen Potentialausgleichs wird darin gesehen, daß auf jegliche Montagearbeit zur Verbindung einer Erdungsklammer mit einer Litze verzichtet werden kann. Es handelt sich vielmehr bei der Erfindung um eine litzen- bzw. leitungslose elektrische Verbindung zwischen dem Oberteil und dem Unterteil von metallischen Hohlprofilen wie Installationskanälen und dergleichen über die Erdungsklammer. Diese Erdungsklammer besitzt erfindungsgemäß eine Doppelfunktion, sie dient nämlich als Halteklammer einerseits zur Abstandhalterung der freien Enden der Seitenwände des Installatonskanals und andererseits zu direkten Potentialausgleich zwischen Kanaloberteil und Kanalunterteil. Vorteilhaft können damit auch lackierte Kabelkanäle geerdet werden, deren geschlossene Lackoberfläche mit den scharfen Kontaktspitzen der Kabelhalteklammer beschädigt werden. Aufgrund der besonderen Figuration der Kabelhalteklammer stehen diese scharfen Kontaktspitzen unter einem Druckzustand nach außen und liegen damit dauerhaft unter Druck an den beschädigten Oberflächen der Kanalseitenwände an.

Vorteilhaft verlaufen die scharfen Kontaktspitzen über die ganze Breite der freien Klammerenden.

In einer gesonderten Ausführungsform sind aus den Klammerseitenwänden zusätzliche Kontaktspitzen ausgeformt. Diese zusätzlichen Kontaktspitzen wirken als Doppelfunktion des Potentialausgleichs, da über diese zusätzlichen Kontaktspitzen weitere Oberflächen des Kabelkanals an den freien Enden der Seitenwände beschädigt werden. Diese Beschädigung erfolgt gezielt beim Einrasten der Kabelhalteklammer in die öffnung zwischen den profilierten freien Enden der Seitenwände des Kabelkanals.

Die zusätzlichen Kontaktspitzen können durch dreiseitiges Ausstanzen und Abbiegen an der verbleibenden Verbindung zur Klammerseitenwand geschaffen werden.

Die Kabelhalteklammer ist vorteilhaft aus Federstahl geformt und die Einrastung in die durch die freien, profilierten Enden der Seitenwände des Kanalunterteils geschaffene Kanalöffnung verstärkt die Kontaktwirkung der Kontaktspitzen, indem zwischen diesen freien Enden der Seitenwände und der Kabelhalteklammer ein Spannungsverhältnis geschaffen wird.

Der erfindungsgemäße Potentialausgleich erfolgt ohne zusätzliche Anbringung von Schutzleiteranschlußmöglichkeiten und bringt daher eine erhebliche Verkürzung der Fertigungsabläufe. Darüberhinaus ist eine schnelle Montage der Kabelhalteklammer sowie des Kanaloberteils gewährleistet. Das Kanaloberteil, in anderen Worten auch Kanaldeckel genannt, wird nach der Montage der Kabelhalteklammer in die durch die profilierten Enden der Seitenwandungen des Kabelkanals gebildete öffnung eingedrückt, wobei der Deckel mit seinen Seitenwandungen entsprechend den Profilierungen der Kanal seitenwandungen gestaltet ist. Diese Montage des Deckels verstärkt noch das Eindringen der Kontaktspitzen in die zugeordneten Wandbereiche an den freien Enden der Kanalseitenwände und sichert damit die Kontaktierung.

Die Kabelhalteklammer der Erfindung ist an beliebigen Stellen in der Öffnung des Installationskanals positionierbar und durch den Wegfall des Einbaus einer Erdungslitze kommt es zur Einsparung von Kosten und Arbeitszeit bei der Anwendung des erfindungsgemäßen Potentialausgleichs. Auch bei Nachinstallationen kann diese einfache Erdungsmöglichkeit erfolgreich eingesetzt werden, wobei jeglicher Verschnitt des Kanaloberteils entfällt.

In der Zeichnung ist ein Ausführungsbeispiel der erfindungsgemäßen Kabelhalteklammer schematisch dargestellt; es zeigt:
- Fig. 1: die Kabelhalteklammer im Schnitt
- Fig. 2: die Kabelhalteklammer in Draufsicht
- Fig. 3: die Kabelhalteklammer in der Einbausituation

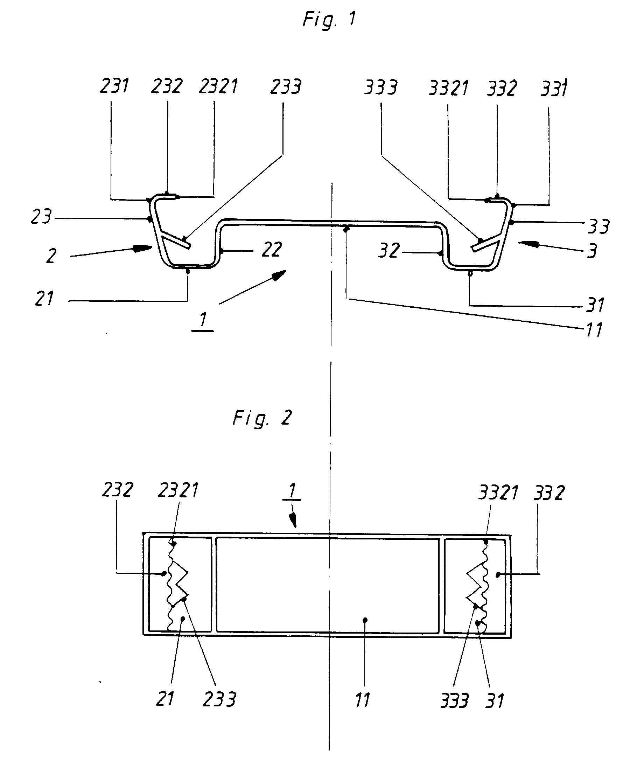

Fig. 1 zeigt die Kabelhalteklammer 1, die in der gezeigten Darstellung mit einem Basisbereich 11 mit an den freien Enden abgekröpften Endbereichen 2, 3 ausgestattet ist. Die Endbereiche 2, 3 sind U-förmig gestaltet und besitzen die über eine Basis 21, 31 miteinander verbundenen Seitenwände 22, 23, 32, 33. Die außenliegenden Seitenwände 23, 33 sind an ihren freien Enden 231, 331 umgebogen und verlaufen parallel zur jeweiligen Basis 21, 31 ein kurzes Stück nach innen in Form einer Überdeckung 232, 332 des U-förmigen Aufnahmeraums. Am freien Ende laufen diese Überdeckungen 232, 332 in scharfe Kontaktspitzen 2321, 3321 (Fig. 2) aus.

Im mittleren Bereich der Seitenwand 23, 33 sind nach innen ragende Kontaktspitzen 233, 333 ausgeformt, die durch dreiseitiges Ausstanzen und Abbiegen in den U-förmigen Innenraum stehen und nur noch einseitig mit der Klammerseitenwand 23, 33 in Verbindung stehen.

Aus der Draufsicht der Fig. 2 auf die Kabelhalteklammer 1 sind die scharfen Kontaktspitzen 2321, 3321 sowie die zusätzlichen Kontaktspitzen 233, 333 ersichtlich. Gleiche Merkmale haben in Fig. 2 gleiche Bezugszeichen erhalten wie in Fig. 1.

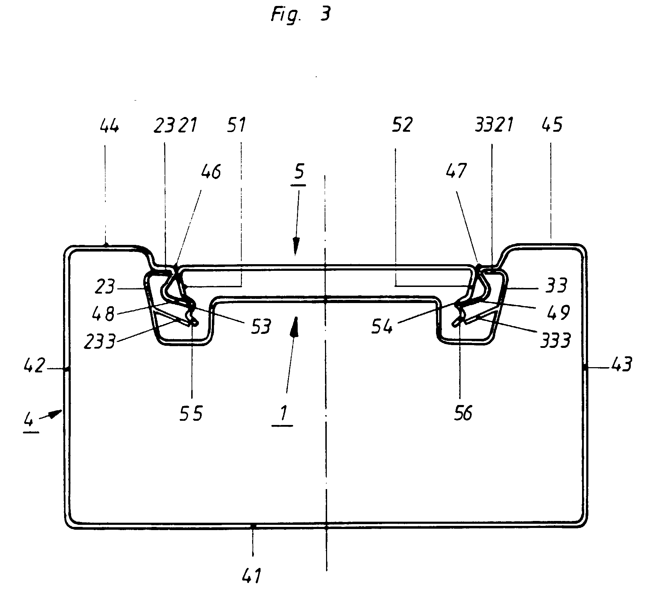

Fig. 3 zeigt die erfindungsgemäße Kabelhalteklammer 1 im Querschnitt im Einsatz in einem Installationskanal 4. Der Installationskanal 4 besteht aus der Basis 41 und den beiden Seitenwänden 42, 43. Die Seitenwände 42, 43 sind im oberen Bereich umgebogen und verlaufen als paralleles Wandungsteil 44, 45 zur Basiswand 41 des Kabelkanals 4.

An den freien Enden sind die parallelen Wandungsteile 44, 45 in einer speziellen Profilierung 46, 47 ausgebildet, deren freier Rand 48, 49 in eine entsprechende, durchgehende Aufnahmeöffnung 53, 54 an den freien, abgebogenen Rändern 51, 52 eines Kanaldeckels 5 einrasten.

Die zusätzlichen Kontaktspitzen 233, 333 kontaktieren den unteren freien Rand 55, 56 der Seitenwände 51, 52 des Kanaldeckels 5. Die Kontaktspitzen 2321, 3321 und 233, 333 schaffen dabei einen litzenfreien Potentialausgleich zwischen dem Installationskanal 4 und dem Kanaldeckel 5.

## Patentansprüche

1. Einrichtung zum Potentialausgleich bei mehrteiligen metallischen Hohlprofilen, vorzugsweise bei metallischen Installationskanälen, wobei zwischen dem Kanaldeckel und dem Kanalunterteil eine elektrisch leitende Verbindung geschaffen ist, dadurch gekennzeichnet, daß der Potentialausgleich in die Kabelhalteklammer (1) verlagert ist, deren freie Klammerenden (232, 332) mit scharfen Kontaktspitzen (2321, 3321) ausgestattet sind, welche bei der Verklammerung mit den freien, profilierten Enden (48, 49) der Seitenwände (42, 43) des Kanalunterteils (4) zur Herstellung der elektrisch leitenden Verbindung deren Oberfläche gezielt beschädigen.

2. Einrichtung nach Anspruch 1, dadurch gekennzeichnet, daß die scharfen Kontaktspitzen (2321, 3321) über die ganze Breite der freien Klammerenden (232, 332) verlaufen.

3. Einrichtung nach Anspruch 1, dadurch gekennzeichnet, daß aus den Klammerseitenwänden (23, 33) zusätzliche Kontaktspitzen (233, 333) ausgeformt sind.

4. Einrichtung nach Anspruch 3, dadurch gekennzeichnet, daß die zusätzlichen Kontaktspitzen (233, 333) durch dreiseitiges Ausstanzen und Abbiegen an der verbleibenden Verbindung zur Klammerseitenwand geschaffen sind.

5. Einrichtung nach Ansprüchen 1, 3 und 4, dadurch gekennzeichnet, daß die Einrastung des Kanaldeckels (5) in die durch die freien, profilierten Enden (48, 49) der Seitenwände (42, 43) des Kanalunterteils (4) geschaffene Kanalöffnung die Kontaktwirkung der Kontaktspitzen (2321, 3321, 233, 333) verstärkt.

6. Einrichtung nach einem oder mehreren der vorangegangenen Ansprüche, dadurch gekennzeichnet, daß die Kabelhalteklammer (1) aus Federstahl geformt ist.

## Claims

1. Apparatus for equalising potential in multi-piece hollow metallic profiles, preferably in metallic installation ducts, incorporating an electrically conductive connection between the duct cover and duct base, characterised in that the potential equalisation occurs in the cable retainer clip (1), the free ends (232, 332) of which are fitted with sharp contact points (2321, 3321) which, when clipped in place, engage in the shaped free ends (48, 49) of the side walls (42, 43) of the duct base (4) and infringe the surfaces thereof in a specific way in order to create the electrically conductive connection.

2. Apparatus according to Claim 1, characterised in that the sharp contact points (2321, 3321) extend across the full width of the free ends (232, 332) of the retainer clip.

3. Apparatus according to Claim 1, characterised in that additional contact points (233, 333) are formed out of the side walls (23, 33) of the clips.

4. Apparatus according to Claim 3, characterised in that the additional contact points (233, 333) on the side walls of the clip are produced by punching on three sides and bending along the side which remains connected.

5. Apparatus according to Claims 1, 3 and 4, characterised in that the insertion of the duct cover (5) in the opening between the shaped free ends (48, 49) of the side walls (42, 43) of the duct base (4) enhances the contact provided by the contact points (2321, 3321, 233, 333).

6. Apparatus according to one or more of the preceding Claims, characterised in that the cable retainer clip (1) is made of spring steel.

## Revendications

1. Dispositif pour liaison équipotentielle entre profilés métalliques creux constitués de plusieurs parties, notamment entre goulottes d'installation métalliques, - une liaison électrique étant créée entre le couvercle et le socle de la goulotte -, caractérisé en ce que la liaison équipotentielle est reportée dans les agrafes (1) dont les extrémités libres (232, 332) sont munies de pointes de contact (2321, 3321), lesquelles endommagent lors de l'agrafage avec les extrémités libres profilées (48, 49) la surface des parois latérales (42, 43) du socle de la goulotte (4) pour établir la liaison électrique.

2. Dispositif selon la revendication 1 caractérisé en ce que les pointes de contact (2321, 3321) se situent sur toute la largeur des extrémités libres (232, 332) des agrafes.

3. Dispositif selon la revendication 1, caractérisé en ce que des pointes de contact supplémentaires (233, 333) sont réalisées dans les parois latérales des agrafes (23, 33).

4. Dispositif selon la revendication 3, caractérisé en ce que les pointes de contact supplémentaires (233, 333) sont poinçonnées sur 3 côtés et pliées vers la pointe restante latérale de l'agrafe.

5. Dispositif selon les revendications 1, 3 et 4, caractérisé en ce que le clippage du couvercle de la goulotte (5) dans l'ouverture de la goulotte formée par les extrémités libres (48, 49) des parois latérales (42, 43) du socle de la goulotte (4), renforce la pression sur les pointes de contact (2321, 3321, 233, 333).

6. Dispositif selon l'une quelconque des revendications, caractérisé en ce que l' agrafe (1) est en acier à ressort.
